(19)

Europäisches
Patentamt
European
Patent Office
Office européen
des brevets

(11) **EP 3 121 625 A1**

(12) **EUROPEAN PATENT APPLICATION**

(43) Date of publication:
**25.01.2017 Bulletin 2017/04**

(51) Int Cl.:
**G01V 11/00** (2006.01)

(21) Application number: **16305903.3**

(22) Date of filing: **13.07.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.07.2015 US 201562194377 P**
**20.05.2016 US 201662339342 P**

(71) Applicant: **CGG Services SA**
**91300 Massy (FR)**

(72) Inventors:
• **SPENCE, Graham**
**91300 Massy (FR)**
• **BRINDLE, Scott**
**91300 Massy (FR)**
• **WINDMILL, Richard**
**91300 Massy (FR)**
• **ALLO, Fabien**
**91300 Massy (FR)**

(74) Representative: **Petit, Maxime**
**Ipsilon**
**Le Centralis**
**63, avenue du Général Leclerc**
**92340 Bourg-la-Reine (FR)**

(54) **PREDICTING MECHANICAL AND ELASTIC ROCK PROPERTIES OF THE SUBSURFACE**

(57) Mechanical and elastic rock properties of a subsurface are predicted (100) using actual physical samples (208) from the subsurface as an alternative to wireline data obtained from wells. Geological rock data are generated from a physical geological sample of the subsurface (104). These geological rock data include elemental data, mineralogical data and textural data for the subsurface. The geological rock data are used in a rock physics model (110) to generate elastic and mechanical rock properties of the subsurface.

FIG. 1

EP 3 121 625 A1

**Description**

CROSS REFERENCE TO RELATED APPLICATIONS

This application claims priority and benefit from U.S. Provisional Patent Application Nos. 62/194,377, filed July 20, 2015, for "Mechanical And Elastic Rock Properties - Linking An Integrated Imaging, Elemental And Mineralogical Analysis Of Rock Material With Rock Physics Models To Predict The Mechanical And Elastic Properties Of The Subsurface" and 62/339,342, filed May 20, 2016, for "Borehole Geomechanics", the entire contents of which are incorporated herein by reference.

TECHNICAL FIELD

Embodiments of the subject matter disclosed herein generally relate to methods and systems for determining rock properties in a subsurface to support hydrocarbon, gas and petroleum production from wells.

BACKGROUND

Information on the quantification and distribution of mechanical and elastic properties of rocks in the subsurface including through oil and gas reservoirs, and in particular unconventional oil and gas reservoirs, is critical for accurately appraising hydrocarbon potential and to optimize stage placement for hydraulic stimulation in support of drilling and production operations. Currently, oil and gas operators use wireline data logging tools to acquire petrophysical rock properties at the wellbore. These petrophysical rock properties include density, acoustic travel times and porosity. The petrophysical rock properties acquired from the wireline data are used to derive mechanical and elastic properties of the subsurface rock such as bulk modulus, shear modulus, Young's modulus and Poisson's ratio. These mechanical and elastic properties are derived at points along the logged wellbore.

Rock physics models developed through the field of geophysics enable the elastic and mechanical properties of the subsurface rock to be estimated from petrophysical interpretation of wireline log data. Typical input logs to the rock physics models from the wireline log data include gamma ray, mineral fractions, neutron porosity and saturations derived from resistivity. The resulting output logs from the rock physics models are typically bulk density, P-wave and S-wave velocities. These three elastic properties, i.e., bulk density, P-wave velocity and S-wave velocity, are used to derive mechanical properties of the subsurface rock such as Young's modulus and Poisson's ratio directly.

Wireline data tools, however, are expensive and can be damaged or lost when lowered into wells. In addition, wireline log data are not always available for older wells. Therefore, an alternative source of the petrophysical rock properties used as inputs to the rock physics models is needed.

SUMMARY

Exemplary embodiments are directed to systems and methods that use actual physical samples of the subsurface to obtain petrophysical rock properties used as inputs for the rock physics models. These physical samples include samples from rock outcrops, drilled cores and unconsolidated rock fragments from the drilling process called cuttings. Therefore, older wells, which may or may not have had wireline analysis at the time of drilling, can be analyzed and the rock properties determined using, for example, stored or legacy geological material.

Exemplary embodiments are directed to a method for predicting mechanical and elastic rock properties of a subsurface. Geological rock data are generated from a physical geological sample of the subsurface. Suitable physical geological samples include, but are not limited to, a vertical borehole core, a horizontal borehole core, unconsolidated cuttings from a well, rock outcroppings and combinations thereof. The geological rock data include at least one of elemental data, mineralogical data and textural data for the subsurface. In one embodiment, generating the geological rock data further includes using the physical geological sample to determine at least one of mineral volumes, macroporosity, grain size, pore size, grain geometry and pore and grain aspect ratio. In one embodiment, at least one of elemental analysis, mineralogical analysis and imaging analysis of the physical geological sample are used to generate the geological rock data.

The geological rock data are used in a rock physics model to generate elastic and mechanical rock properties of the subsurface. In one embodiment, the geological rock data are inputted into the rock physics model to determine elastic properties of the subsurface, and the elastic properties of the subsurface are used to generate derived elastic properties of the subsurface. The elastic properties and derived elastic properties are used to generate mechanical properties for the subsurface. The elastic properties include bulk density, bulk moduli, shear moduli, p-wave velocity and s-wave velocity, and the derived elastic properties include impedance and velocity ratio. The mechanical properties include Young's modulus and Poisson's ratio.

In one embodiment, using the geological rock data in the rock physics model to generate elastic and mechanical rock properties of the subsurface includes using mineral types and associated volumes from the geological rock data to estimate the elastic rock properties. In another embodiment, using the geological rock data in the rock physics model to generate elastic and mechanical rock properties of the subsurface includes using porosity data derived from images of the physical geological sample to determine dry rock properties of the subsurface. A given fluid to be substituted into pore spaces in the physical geological sample is identified along with fluid properties associated with the given fluid. The porosity data derived from images of the physical geological sample in combination with these fluid properties are used to determine saturated rock properties of the subsurface.

In one embodiment, actual measured porosity for the subsurface is obtained using at least one of porosity wireline logs and core plug porosity data. The actual measured porosity is used to calibrate the porosity data derived from images of the physical geological sample. In one embodiment, using the geological rock data in the rock physics model to generate elastic and mechanical rock properties of the subsurface includes using textural rock properties derived from images of the physical geological sample to model elasticity of a rock frame in the subsurface. When the rock physics model is an inclusion-based model, using textural rock properties derived from images includes using pore geometry data. When the rock physics model is a grain-based model, using textural rock properties derived from images includes using at least one of a number of contacts between grains, grain sorting, grain surface conditions and cement localization. In one embodiment, the generated elastic and mechanical rock properties of the subsurface are used to determine locations of wells in the subsurface.

Exemplary embodiments are also directed to a computer-readable medium containing computer-executable code that when read by a computer causes the computer to perform a method for predicting mechanical and elastic rock properties of a subsurface that includes generating geological rock data from a physical geological sample of the subsurface, where the geological rock data include at least one of elemental data, mineralogical data and textural data for the subsurface and using the geological rock data in a rock physics model to generate elastic and mechanical rock properties of the subsurface.

Exemplary embodiments are directed to a computing system for predicting mechanical and elastic rock properties of a subsurface. The computing system includes a storage device containing geological rock data from a physical geological sample of the subsurface and a processer in communication with the storage device and configured to use the geological rock data in a rock physics model to generate elastic and mechanical rock properties of the subsurface. The geological rock data include at least one of elemental data, mineralogical data and textural data for the subsurface. In one embodiment, the processor is further configured to identify a given fluid to be substituted into pore spaces in the physical geological sample, identify fluid properties associated with the given fluid, use mineral types and associated volumes from the geological rock data to estimate the elastic rock properties, use porosity data derived from images of the physical geological sample to determine dry rock properties of the subsurface, use the porosity data derived from images of the physical geological sample and the fluid properties to determine saturated rock properties of the subsurface, obtain actual measured porosity for the subsurface using at least one of porosity wireline logs and core plug porosity data and use the geological rock data in the rock physics model to generate elastic and mechanical rock properties of the subsurface by using the actual measured porosity to calibrate the porosity data derived from images of the physical geological sample.

BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 is a flowchart of an embodiment of a method for predicting mechanical and elastic rock properties of a subsurface;
Figure 2 is a schematic illustration of an embodiment for analyzing a geological sample;
Figure 3 is an illustration of an embodiment of the output form the rock physics model;
Figure 4 is a chart illustrating an embodiment of mechanical parameters that can be quantified using the rock physics model; and
Figure 5 is a schematic representation of an embodiment of a computing system for use in executing a method for predicting mechanical and elastic rock properties of a subsurface.

DETAILED DESCRIPTION

The following description of the embodiments refers to the accompanying drawings. The same reference numbers in different drawings identify the same or similar elements. The following detailed description does not limit the invention. Instead, the scope of the invention is defined by the appended claims. Some of the following embodiments are discussed, for simplicity, with regard to local activity taking place within the area of a seismic survey. However, the embodiments to be discussed next are not limited to this configuration, but may be extended to other arrangements that include regional activity, conventional seismic surveys, etc.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

In general, rock physics models utilize a three step process to generate the desired mechanical and elastic properties of the subsurface form the input rock properties. In the first step, the effective mineral properties of the rock, e.g., density, bulk modulus and shear modulus, are computed based on a weighted average of the different mineral constituents. Commonly used equations for these computations include, but are not limited to, the Voigt upper bound, $M_v = \sum_i f_i M_i$, the Reuss lower bound, $M_R = \left| \sum_i \frac{f_i}{M_i} \right|^{-1}$, the Hashin-Shtrikman bounds,

$$K_{HS}^{\pm} = K_1 + \frac{f_2}{(K_2 - K_1)^{-1} + f_1\left(K_1 + \frac{4}{3}\mu_1\right)^{-1}} \quad \text{and} \quad \mu_{HS}^{\pm} = \mu_1 + \frac{f_2}{(\mu_2 - \mu_1)^{-1} + 2f_1(K_1 + 2\mu_1)/\left[5\mu_1\left(K_1 + \frac{4}{3}\mu_1\right)\right]}, \quad \text{and}$$

combinations of these equations, for example, the Voigt-Reuss-Hill average, $M_H = \frac{M_V + M_R}{2}$.

In the second step, the dry rock properties, i.e., dry rock bulk and shear modulus, of the subsurface rock are calculated by integrating the effect of the pore space geometry and contacts between the different rock constituents. This calculation is made using two main types of models, grain-based models and inclusion-based models. Grain-based models are derived from the Hertz-Mindlin model, $K_{dry} = \left[ \frac{C^2(1-\phi)^2 \mu_m^2}{18\pi^2(1-v_m)^2} P_{eff} \right]^{1/3}$ and

$\mu_{dry} = \frac{5 - 4v_m}{5(2 - v_m)} \left[ \frac{3C^2(1-\phi)^2 \mu_m^2}{2\pi^2(1-v_m)^2} P_{eff} \right]^{1/3}$, which defines the rock frame elasticity based on the effective pressure, the porosity, the number of contacts between grains and the grain elastic properties. Inclusion-based models are derived from the Kuster-Toksöz model, $\left( K_{dry} - K_m \right) \frac{\left(K_m + \frac{4}{3}\mu_m\right)}{\left(K_{dry} + \frac{4}{3}\mu_m\right)} = \sum_i f_i (K_i - K_m) P(\alpha)^i$,

$\left( \mu_{dry} - \mu_m \right) \frac{(\mu_m + \xi_m)}{(\mu_{dry} + \xi_m)} = \sum_i f_i (\mu_i - \mu_m) Q(\alpha)^i$ with $\xi_m = \frac{\mu(9K_m + 8\mu_m)}{6(K_m + 2\mu_m)}$, which defines the rock frame elasticity based on the geometry of the pore space idealized as ellipsoids of a given aspect ratio.

In the third step, the saturated rock properties are computed by performing a fluid substitution, i.e., the addition of a given fluid in the pore space. The most commonly used model was developed by Gassmann, $K_{sat} = K_{dry} + \frac{\left(1 - K_{dry}/K_m\right)^2}{\phi/K_{fl} + (1-\phi)/K_m - K_{dry}/K_m^2}$ and $\mu_{sat} = \mu_{dry}$, but is only valid when the pore-filling material is a fluid with zero shear modulus. Ciz and Shapiro have later generalized the equations to account for a solid pore-filling material. The fluid properties required for the substitution can be measured in laboratory or computed from empirical equations like Batzle & Wang and the FLAG consortium models.

As used in these models, *M* refers to the elastic modulus (bulk or shear), and K refers to the bulk modulus. The shear modulus is indicated as $\mu$, and the mineral volume fraction is *f*. The effective pressure is $P_{eff}$, while the effective porosity is $\phi$. Poisson's Ratio is given by v, and $P(\alpha)$ and $Q(\alpha)$ indicate pore shape factors depending on the pore aspect ratio $\alpha$. The subscripts used in the equation are m for a mineral property, *fl* for a fluid property, *dry* for a dry rock property and *sat* for a saturated rock property.

Exemplary embodiments utilize integrated digital image (petrographic, photograph, electron scanning) analysis collected from geological samples to extract meaningful textural data. This is in combination with fluorescent, x-ray or energy dispersive elemental analysis to provide mineralogical quantification, through a mineralogical model, of actual physical rock material returned to the surface or available at the surface to obtain accurate data about the subsurface rock. As used herein, elemental analysis refers to a quantification of the elemental composition of any given point of the subsurface being analyzed. Suitable data about the subsurface rock include, but are not limited to, mineral type and proportions, density, porosity and grain and pore textures such as size and shape. In one embodiment, these subsurface rock data are used to calibrate the petrophysical interpretation of wireline data, in particular density and porosity logs. Alternatively, the subsurface rock data are input directly into the rock physics models to estimate the elastic and mechanical properties of the analyzed subsurface rocks. In particular, the mineral types and associated volume fractions are used in the first step of computing the effective mineral properties of the rock to get an accurate estimate of the effective mineral elastic properties. In addition, the porosity of the subsurface rock is derived from the images of the actual physical rock material. This derived porosity of the subsurface rock is used in the second step of calculating the dry rock properties estimation and in the third step of computing the saturated rock properties.

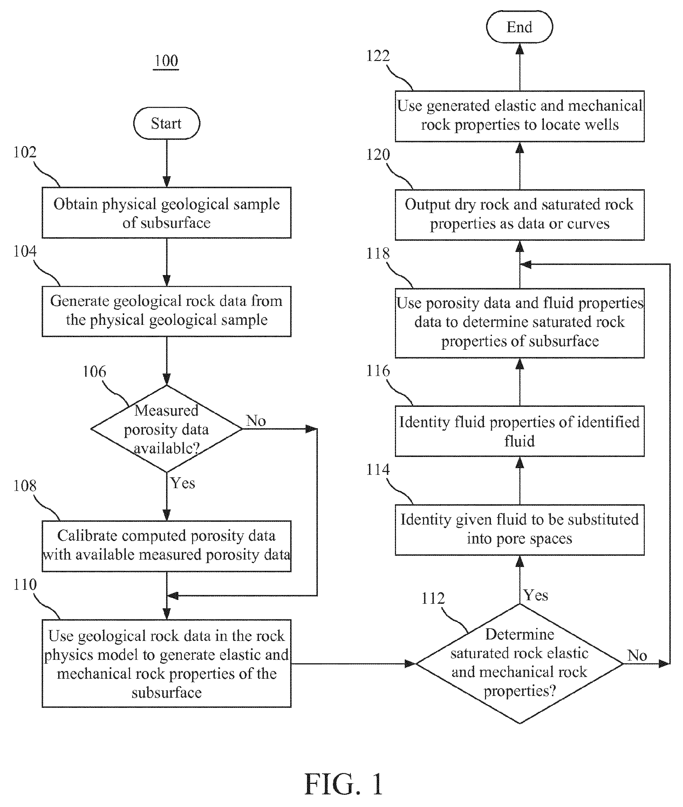

Referring initially to Figure 1, an exemplary embodiment is directed to method for predicting mechanical and elastic rock properties of a subsurface 100. Initially, a physical geological sample is obtained of the subsurface area for which elastic and mechanical rock properties are to be determined 102. Suitable physical geological samples include, but are not limited to, vertical borehole cores, horizontal borehole cores, unconsolidated cuttings from a well, rock outcroppings and combinations thereof. When rock outcroppings are used, weathering effects are taken into account. In one embodiment, the physical geological sample, e.g., the rock material, is collected at the wellsite as per standard drilling operating procedures. Alternatively, the physical geological samples are obtained from previously drilled and stored drilling cores and cuttings.

Having obtained the geological sample, geological rock data are generated from the physical geological sample of the subsurface 104. The generated geological rock data include one or more of elemental data, mineralogical data and textural data for the subsurface. In one embodiment, the physical geological sample is used to determine at least one of mineral volumes, macroporosity, grain size, pore size, grain geometry and pore and grain aspect ratio. Any suitable method for generating geological rock data from a physical geological sample that is known and available in the art can be used including physical, chemical and visual analysis methods. In one embodiment, at least one of elemental analysis, mineralogical analysis and imaging analysis of the physical geological sample is used to generate the geological rock data.

In one embodiment, images of the actual physical geological sample of the subsurface rock material are used to derive textural rock properties used, for example, in the second step of the rock physics model to model the elasticity of the rock frame. This includes deriving the pore geometry, which is approximated with a pore aspect ratio, utilized by inclusion-based models. Alternatively, the number of contact between grains, grain sorting, grain surface condition (rough versus smooth) and cement localization (grain coating or at grain contact) needed by grain-based models are derived.

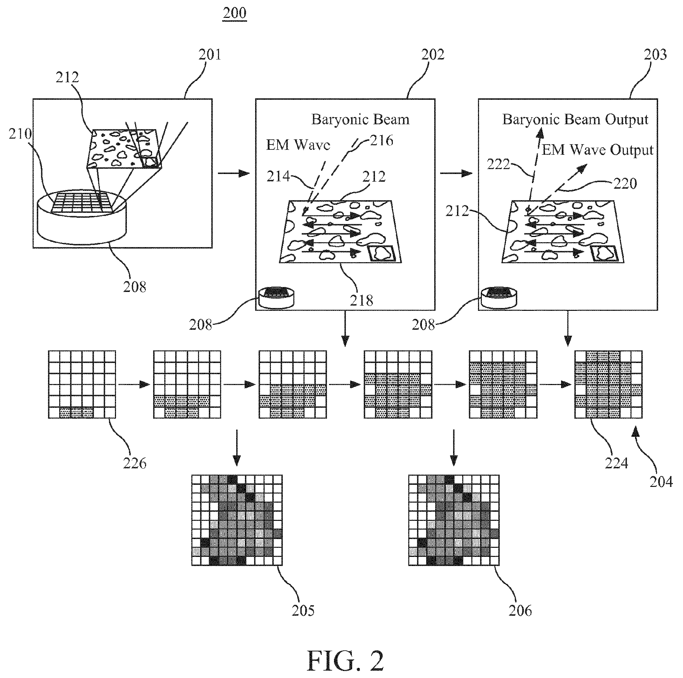

In one embodiment, the physical geological sample is prepared for analysis in the imaging, elemental and mineralogical system. Referring now to Figure 2, an embodiment of imaging a physical geological sample for integrated imaging and elemental and mineralogical analysis is illustrated 200. One or more samples can be obtained from a given physical geological sample, for example by taking samples along a given core. Each sample is identified by a number and an associated depth below the surface. For unconsolidated cutting particles, which are identified as being obtained from a given depth below the subsurface, the particles are combined with an epoxy binder. The surface of the resulting aggregate is polished to expose the individual rock particles with the sample.

The geological sample is then prepared for analysis 201 by one or more probing or scanning device. As illustrated, the geological sample 208 is divided or segmented into an analysis grid 210 containing a plurality of individual analysis areas 212. The size of each individual analysis area is defined based on the field of view of the probing device. The probing device is then used to scan each individual analysis area. In the probing step 202, each individual analysis area is probed using an EM Wave 214 or Baryonic beam 216 following a raster scan pattern 218. In a data collection step 203, the output from each analysis point from the EM Wave 220 or Baryonic beam 222 scan of the surface is obtained or collected.

The collected output from each analysis point is processed 204 to determine the elemental and mineralogical condition at each analysis point. The process is repeated for each subsequent raster point to build an elemental and mineralogical image grid 226 of the area of analysis for a given particle 224 within the sample. The output is either an EM Wave image showing elemental and mineralogical data for the given particle 205 or a Baryonic Beam image showing elemental and mineralogical data for the given particle 206. This process is repeated for each individual analysis area 212 in the analysis grid 210 to generate the EM Wave or Baryonic beam elemental, mineralogical and textural image for each particle in the sample. The resulting images can be used to define the mineral fractions utilized in the rock physics model equations.

In one embodiment, The acquired or determined geological rock data, for example, mineral volumes, macroporosity, grain size, pore size, grain geometry, pore and grain aspect ratio are translated or exported to a machine or software readable file format such as excel .csv or .txt or .las.

Wireline log data from wells passing through a given subsurface are not always available. In addition, wireline log data availability on horizontal wells is significantly more limited than on vertical wells due to the risk of getting the tool stuck and the associated costs. Physical geological samples such as drill cuttings, however, are always available. Therefore, exemplary embodiments link the measurement of rock properties, including but not limited to, mineralogy, density, porosity and grain/pore fabric, of drill core or cuttings by imaging, elemental and mineralogical based analysis to rock physics models to predict the desired elastic and mechanical properties of the subsurface. These analyses can be conducted in a laboratory setting or in 'real time' at the well site using a portable based system.

Suitable analysis systems image the physical geological samples using EM waves or a baryon beam and perform elemental and mineral detections through probing via EM wave or baryon beam. One benefit of the integrated analytical system is that textural details, e.g., pore aspect ratio, utilized in inclusion-based models are obtained. Other non-integrated analytical tools such as X-ray fluorescence (XRF) or x-ray diffraction (XRD) alone cannot provide the porosity or textural elements desired in addition to an indication of the mineralogy or elemental content.

Since the physical geological sample can be a drilling core that has been transported to the surface from a given depth or unconsolidated drill cuttings, the actual in-situ porosity of the subsurface rock can vary from the porosity obtained from those physical geological samples. The obtained porosity is typically an overestimation of the actual in-situ porosity as the rock material might have been damaged, i.e., additional cracks introduced, and as the drop of effective pressure on the cuttings when brought back to the surface results in an increased pore volume. Therefore, exemplary embodiments can compensate for this variation in porosity by calibrating the porosity obtained from the physical geological samples to actual rock porosities when suitable porosity data are available. This compensation can be conducted during generation of the geological rock data or during subsequent use of the geological rock data to generate mechanical and elastic properties of the subsurface.

Returning to Figure 1, in one embodiment, a determination is made regarding the availability of measured porosity data 106, for example, neutron porosity or density porosity from wireline logs or core plug porosity data. In one embodiment, the actual measured porosity for the subsurface is obtained using at least one of porosity wireline logs and core plug porosity data. If measured porosity data are available or are obtained, the computed porosity data, e.g., the porosity derived from the mineralogical and textural data, e.g., derived from images of the physical geological sample, are calibrated with the available measured porosity data 108. If measured porosity data are not available, then the method continues with the generation of elastic and mechanical rock properties without porosity calibration.

Once all of the relevant geological rock properties are determined as described above, the geological rock data are used as input to the most suitable rock physics model based on the type of rock being analyzed and the data available. Suitable methods for inputting data into a rock physics model including using software programs embodying the rock physics models are known and available in the art. The resulting main outputs of the rock physics model are the elastic properties of the dry rock, i.e., bulk density, P-wave and S-wave velocities, which are combined to compute derived elastic attributes such as impedances and velocity ratio. Mechanical properties of the dry rocks are derived from the elastic properties.

Therefore, in one embodiment the geological rock data are then used in a rock physics model to generate elastic and mechanical rock properties of the subsurface 110. Suitable rock physics models include, but are not limited to, the rock physics equations described herein. In one embodiment, the geological rock data are inputted into the rock physics model to determine elastic properties of the subsurface, e.g., bulk density, p-wave velocity and s-wave velocity, and the determined elastic properties of the subsurface to generate derived elastic properties of the subsurface, e.g., impedance and velocity ratio. The elastic properties and derived elastic properties are then used to generate mechanical properties for the subsurface, e.g., Young's modulus and Poisson's ratio.

In one embodiment, mineral types and associated volumes from the geological rock data are used to estimate the elastic rock properties. In another embodiment, porosity data derived from images of the physical geological sample are used to determine dry rock properties of the subsurface. In one embodiment, textural rock properties derived from images of the physical geological sample are used to model the elasticity of a rock frame in the subsurface. When the rock physics model utilizes an inclusion-based model, using the textural rock properties derived from images further includes using pore geometry data. When the rock physics model utilizes a grain-based model, using textural rock properties derived from images includes using at least one of a number of contacts between grains, grain sorting, grain surface conditions and cement localization.

In general, the mechanical and elastic rock properties determined from the geological data obtained from the physical geological samples represent dry rock elastic and mechanical rock properties. However, saturated rock mechanical and elastic rock properties may also be desired. Therefore, in one embodiment, a determination is made regarding whether to determine saturated rock elastic and mechanical rock properties 112. If saturated rock properties are to be determined, then a given fluid to be substituted into pore spaces in the physical geological sample is identified 114, and the fluid properties associated with the given fluid are also identified 116. Suitable fluids include, but are not limited to, brine, gas, oil and combinations thereof. The fluid properties for these fluids can be obtained from any suitable source including direct measurements and databases of fluid properties. In one embodiment, the fluid properties are obtained from laboratory measurements or are assumed as these fluid properties cannot be obtained through image, elemental and mineralogical analysis. The porosity data derived from images of the physical geological sample and the fluid properties are then used to determine saturated rock properties of the subsurface 118.

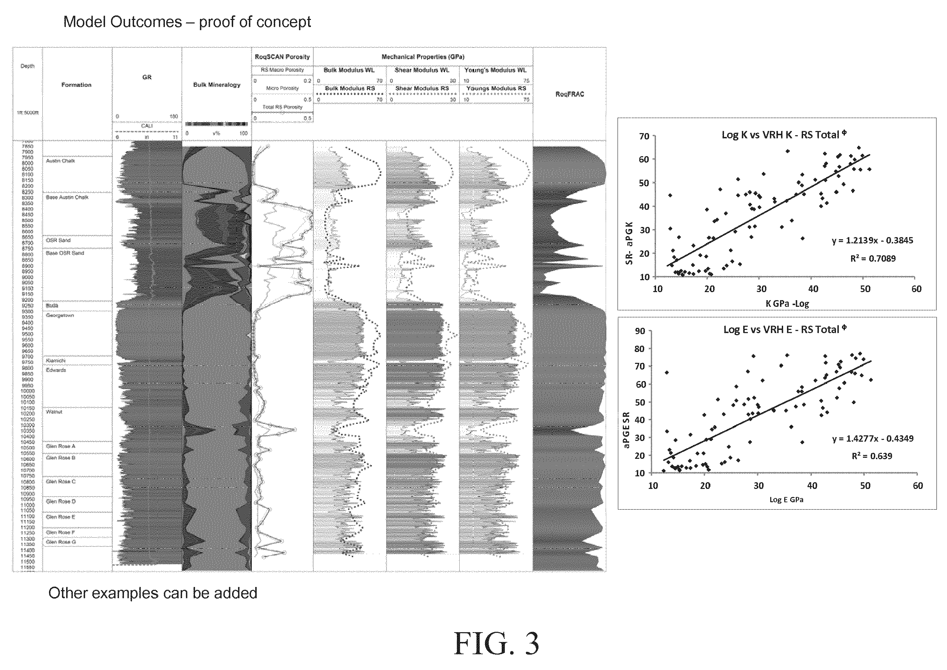

The dry rock and saturated rock elastic and mechanical rock properties can then be saved and output 120 for example, as a series of curves or charts (Figure 3) or as raw data in csv, las, txt or excel file. In addition, the generated elastic and mechanical rock properties of the subsurface, for both dry and saturated rock, are used to determine locations of wells in the subsurface 122 or to guide drilling operations and production from reservoirs within the subsurface.

Exemplary embodiments provide a cost effective, non-destructive and non-intrusive way of obtaining the rock mechanical data of a subsurface used to plan more efficient well completions. The Young's modulus and Poisson's ratio values obtained can be incorporated into a near-well geomechanical model to predict fracture propagation direction and magnitude due to hydraulic fracturation, which is useful for geomechanical feasibility studies. An extension to three-dimensional mechanical earth model is possible with an extrapolation away from the control wellbores based on seismic-derived elastic attributes. This would reduce uncertainty when planning new appraisal wells in general and for unconventional reservoirs in particular. In one embodiment, the generated or predicted elastic properties of the subsurface are used to populate or calibrate existing reservoir models used to replicate the production history and seismic response of the reservoir.

In one embodiment, the rock physics models can be modified to take into account the in-situ stresses that have an effect on the in-situ mechanical properties. For example, a correction is applied to the rock physic model output when the in-situ stresses are known. However, data on the in-situ stresses cannot be obtained from SEM-EDX analysis of rock at the surface and need to be obtained from a priori information based on laboratory tests and/or regional stress field.

The fluid properties utilized in the rock physics models cannot be quantified from SEM-EDX analysis. In one embodiment, these values are assumed based on any other suitable data available from the time of drilling. For example, the simulation of formation fluid from mud-logging data acquired during the drilling process Rate of Penetration (ROP), gas chromatography and weight on bit) can be used.

In general, rock physics models utilize a large number of variables in the Rock Physics models. Therefore, exemplary embodiments encompass a stochastic workflow in addition to the standard deterministic workflow where each Rock Physics model parameter is given a fixed value. In one embodiment, a plurality of outcomes is generated by varying the Rock Physics model parameter values in order to sample the uncertainty associated to the Rock Physics models.

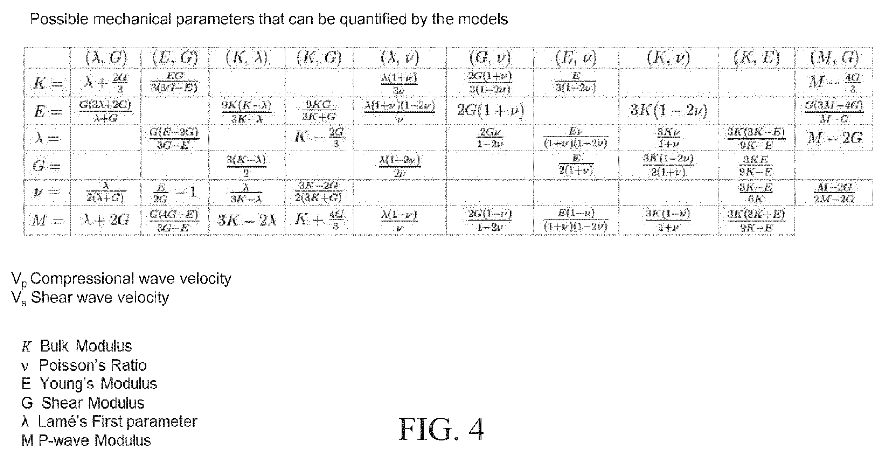

Exemplary embodiments include application to engineering geology and materials science where mechanical properties of a given medium need to be quantified and understood. An embodiment of a range of possible mechanical properties that can be estimated using exemplary embodiments is illustrated in Figure 4. In one embodiment, pseudo elastic logs are generated at the wellbore to use as calibration points for seismic elastic inversion results in order to increase the confidence on estimated elastic attributes away from the wells.

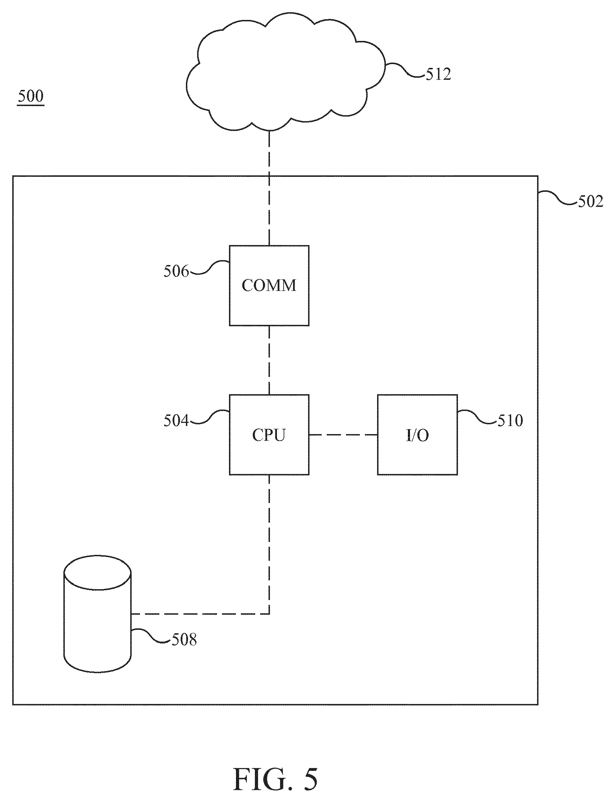

Referring now to Figure 5, exemplary embodiments are directed to a computing system 500 for predicting mechanical and elastic rock properties of a subsurface. In one embodiment, a computing device for performing the calculations as set forth in the above-described embodiments may be any type of computing device capable of obtaining, processing and communicating multi-vintage seismic data associated with seismic surveys conducted at different time periods. The computing system 500 includes a computer or server 502 having one or more central processing units 504 in communication with a communication module 506, one or more input/output devices 510 and at least one storage device 508.

The communication module is used to obtain geological rock data from a physical geological sample of the subsurface. The geological rock data include at least one of elemental data, mineralogical data and textural data for the subsurface for a subsurface region. The geological rock data are stored in the storage device. In addition, the storage device is used to store the outputs for the rock physics model. The input/output device can also be used to communicate or display the outputs of the rock physics models and other data including associated charts and graphs and the proposed location of wells, for example, to a user of the computing system.

The processer is in communication with the communication module and storage device and is configured to use the geological rock data in a rock physics model to generate elastic and mechanical rock properties of the subsurface. The processor is further configured to identify a given fluid to be substituted into pore spaces in the physical geological sample, identify fluid properties associated with the given fluid, use mineral types and associated volumes from the geological rock data to estimate the elastic rock properties, use porosity data derived from images of the physical geological sample to determine dry rock properties of the subsurface, use the porosity data derived from images of the physical geological sample and the fluid properties to determine saturated rock properties of the subsurface, obtain actual measured porosity for the subsurface using at least one of porosity wireline logs and core plug porosity data and use the geological rock data in the rock physics model to generate elastic and mechanical rock properties of the subsurface by using the actual measured porosity to calibrate the porosity data derived from images of the physical geological sample. The resulting and any intermediate data can be stored in the database, displayed in the input/output devices or communicated with the communication module.

Suitable embodiments for the various components of the computing system are known to those of ordinary skill in the art, and this description includes all known and future variants of these types of devices. The communication module provides for communication with other computing systems, databases and data acquisition systems across one or more local or wide area networks 512. This includes both wired and wireless communication. Suitable input/output devices include keyboards, point and click type devices, audio devices, optical media devices and visual displays.

Suitable storage devices include magnetic media such as a hard disk drive (HDD), solid state memory devices including flash drives, ROM and RAM and optical media. The storage device can contain data as well as software code for executing the functions of the computing system and the functions in accordance with the methods described herein. Therefore, the computing system 500 can be used to implement the methods described above associated with predicting mechanical and elastic rock properties of a subsurface. Hardware, firmware, software or a combination thereof may be used to perform the various steps and operations described herein.

Methods and systems in accordance with exemplary embodiments can be hardware embodiments, software embodiments or a combination of hardware and software embodiments. In one embodiment, the methods described herein are implemented as software. Suitable software embodiments include, but are not limited to, firmware, resident software and microcode. In addition, exemplary methods and systems can take the form of a computer program product accessible from a computer-usable or computer-readable medium providing program code for use by or in connection with a computer, logical processing unit or any instruction execution system. In one embodiment, a machine-readable or computer-readable medium contains a machine-executable or computer-executable code that when read by a machine or computer causes the machine or computer to perform a method for predicting mechanical and elastic rock properties of a subsurface in accordance with exemplary embodiments and to the computer-executable code itself. The machine-readable or computer-readable code can be any type of code or language capable of being read and executed by the machine or computer and can be expressed in any suitable language or syntax known and available in the art including machine languages, assembler languages, higher level languages, object oriented languages and scripting languages.

As used herein, a computer-usable or computer-readable medium can be any apparatus that can contain, store, communicate, propagate, or transport the program for use by or in connection with the instruction execution system, apparatus, or device. Suitable computer-usable or computer-readable mediums include, but are not limited to, electronic, magnetic, optical, electromagnetic, infrared, or semiconductor systems (or apparatuses or devices) or propagation mediums and include non-transitory computer-readable mediums. Suitable computer-readable mediums include, but are not limited to, a semiconductor or solid state memory, magnetic tape, a removable computer diskette, a random access memory (RAM), a read-only memory (ROM), a rigid magnetic disk and an optical disk. Suitable optical disks include, but are not limited to, a compact disk - read only memory (CD-ROM), a compact disk - read/write (CD-R/W) and DVD.

The disclosed exemplary embodiments provide a computing device, software and method for predicting mechanical and elastic rock properties of a subsurface. It should be understood that this description is not intended to limit the invention. On the contrary, the exemplary embodiments are intended to cover alternatives, modifications and equivalents, which are included in the spirit and scope of the invention. Further, in the detailed description of the exemplary embodiments, numerous specific details are set forth in order to provide a comprehensive understanding of the invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein. The methods or flowcharts provided in the present application may be implemented in a computer program, software, or firmware tangibly embodied in a computer-readable storage medium for execution by a geophysics dedicated computer or a processor.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

**Claims**

1. A method for predicting mechanical and elastic rock properties of a subsurface (100), the method comprising:

   generating geological rock data (104) from a physical geological sample (208) of the subsurface, the geological rock data comprising at least one of elemental data, mineralogical data and textural data for the subsurface; and
   using the geological rock data in a rock physics model (110) to generate elastic and mechanical rock properties of the subsurface.

2. The method of claim 1, wherein:

   the physical geological sample comprises a vertical borehole core, a horizontal borehole core, unconsolidated cuttings from a well, rock outcroppings or combinations thereof; and
   generating the geological rock data further comprises:

using the physical geological sample to determine at least one of mineral volumes, macroporosity, grain size, pore size, grain geometry and pore and grain aspect ratio; and
using at least one of elemental analysis, mineralogical analysis and imaging analysis of the physical geological sample to generate the geological rock data.

3. The method of claim 1, wherein using the geological rock data in the rock physics model to generate elastic and mechanical rock properties of the subsurface further comprises:

inputting the geological rock data into the rock physics model to determine elastic properties of the subsurface;
using the elastic properties of the subsurface to generate derived elastic properties of the subsurface; and
using the elastic properties and derived elastic properties to generate mechanical properties for the subsurface.

4. The method of claim 3, wherein:

the elastic properties comprise bulk density, bulk moduli, shear moduli, p-wave velocity and s-wave velocity;
the derived elastic properties comprise impedance and velocity ratio; and
the mechanical properties comprise Young's modulus and Poisson's ratio.

5. The method of claim 1, wherein using the geological rock data in the rock physics model to generate elastic and mechanical rock properties of the subsurface further comprises using porosity data derived from images of the physical geological sample to determine dry rock properties of the subsurface.

6. The method of claim 5, wherein:

the method further comprises identifying a given fluid to be substituted into pore spaces in the physical geological sample and identifying fluid properties associated with the given fluid; and
using the geological rock data in the rock physics model to generate elastic and mechanical rock properties of the subsurface further comprises using the porosity data derived from images of the physical geological sample and the fluid properties to determine saturated rock properties of the subsurface.

7. The method of claim 5, wherein:

the method further comprises obtaining actual measured porosity for the subsurface using at least one of porosity wireline logs and core plug porosity data; and
using the geological rock data in the rock physics model to generate elastic and mechanical rock properties of the subsurface further comprises using the actual measured porosity to calibrate the porosity data derived from images of the physical geological sample.

8. The method of claim 1, wherein using the geological rock data in the rock physics model to generate elastic and mechanical rock properties of the subsurface further comprises using textural rock properties derived from images of the physical geological sample to model elasticity of a rock frame in the subsurface.

9. The method of claim 1, further comprising using the generated elastic and mechanical rock properties of the subsurface to determine locations of wells in the subsurface.

10. A computer-readable medium containing computer-executable code that when read by a computer causes the computer to perform a method for predicting mechanical and elastic rock properties of a subsurface (100), the method comprising:

generating geological rock data (104) from a physical geological sample (208) of the subsurface, the geological rock data comprising at least one of elemental data, mineralogical data and textural data for the subsurface; and
using the geological rock data in a rock physics model (110) to generate elastic and mechanical rock properties of the subsurface.

11. The computer readable medium of claim 10, wherein using the geological rock data in the rock physics model to generate elastic and mechanical rock properties of the subsurface further comprises:

inputting the geological rock data into the rock physics model to determine elastic properties of the subsurface, the elastic properties comprising bulk density, bulk moduli, shear moduli, p-wave velocity and s-wave velocity;
using the elastic properties of the subsurface to generate derived elastic properties of the subsurface, the derived elastic properties comprising impedance and velocity ratio; and
using the elastic properties and derived elastic properties to generate mechanical properties for the subsurface, the mechanical properties comprising Young's modulus and Poisson's ratio.

12. The computer readable medium of claim 10, wherein:

the method further comprises identifying a given fluid to be substituted into pore spaces in the physical geological sample and identifying fluid properties associated with the given fluid; and
using the geological rock data in the rock physics model to generate elastic and mechanical rock properties of the subsurface further comprises:

using mineral types and associated volumes from the geological rock data to estimate the elastic rock properties;
using porosity data derived from images of the physical geological sample to determine dry rock properties of the subsurface; and
using the porosity data derived from images of the physical geological sample and the fluid properties to determine saturated rock properties of the subsurface.

13. The computer readable medium of claim 12, wherein:

the method further comprises obtaining actual measured porosity for the subsurface using at least one of porosity wireline logs and core plug porosity data; and
using the geological rock data in the rock physics model to generate elastic and mechanical rock properties of the subsurface further comprises using the actual measured porosity to calibrate the porosity data derived from images of the physical geological sample.

14. A computing system (500) for predicting mechanical and elastic rock properties of a subsurface, the computing system comprising:

a storage (508) device comprising geological rock data from a physical geological sample (208) of the subsurface, the geological rock data comprising at least one of elemental data, mineralogical data and textural data for the subsurface; and
a processer (504) in communication with the storage device and configured to use the geological rock data in a rock physics model (110) to generate elastic and mechanical rock properties of the subsurface.

15. The computing system of claim 14, wherein the processor is further configured to:

identify a given fluid to be substituted into pore spaces in the physical geological sample;
identify fluid properties associated with the given fluid;
use mineral types and associated volumes from the geological rock data to estimate the elastic rock properties;
use porosity data derived from images of the physical geological sample to determine dry rock properties of the subsurface;
use the porosity data derived from images of the physical geological sample and the fluid properties to determine saturated rock properties of the subsurface;
obtain actual measured porosity for the subsurface using at least one of porosity wireline logs and core plug porosity data; and
use the geological rock data in the rock physics model to generate elastic and mechanical rock properties of the subsurface by using the actual measured porosity to calibrate the porosity data derived from images of the physical geological sample.

FIG. 1

FIG. 2

Model Outcomes – proof of concept

Other examples can be added

FIG. 3

EP 3 121 625 A1

Possible mechanical parameters that can be quantified by the models

| | $(\lambda, G)$ | $(E, G)$ | $(K, \lambda)$ | $(K, G)$ | $(\lambda, \nu)$ | $(G, \nu)$ | $(E, \nu)$ | $(K, \nu)$ | $(K, E)$ | $(M, G)$ |
|---|---|---|---|---|---|---|---|---|---|---|
| $K =$ | $\lambda + \frac{2G}{3}$ | $\frac{EG}{3(3G-E)}$ | | | $\frac{\lambda(1+\nu)}{3\nu}$ | $\frac{2G(1+\nu)}{3(1-2\nu)}$ | $\frac{E}{3(1-2\nu)}$ | | | $M - \frac{4G}{3}$ |
| $E =$ | $\frac{G(3\lambda+2G)}{\lambda+G}$ | | $\frac{9K(K-\lambda)}{3K-\lambda}$ | $\frac{9KG}{3K+G}$ | $\frac{\lambda(1+\nu)(1-2\nu)}{\nu}$ | $2G(1+\nu)$ | | $3K(1-2\nu)$ | | $\frac{G(3M-4G)}{M-G}$ |
| $\lambda =$ | | $\frac{G(E-2G)}{3G-E}$ | | $K - \frac{2G}{3}$ | | $\frac{2G\nu}{1-2\nu}$ | $\frac{E\nu}{(1+\nu)(1-2\nu)}$ | $\frac{3K\nu}{1+\nu}$ | $\frac{3K(3K-E)}{9K-E}$ | $M - 2G$ |
| $G =$ | | | $\frac{3(K-\lambda)}{2}$ | | $\frac{\lambda(1-2\nu)}{2\nu}$ | | $\frac{E}{2(1+\nu)}$ | $\frac{3K(1-2\nu)}{2(1+\nu)}$ | $\frac{3KE}{9K-E}$ | |
| $\nu =$ | $\frac{\lambda}{2(\lambda+G)}$ | $\frac{E}{2G} - 1$ | $\frac{\lambda}{3K-\lambda}$ | $\frac{3K-2G}{2(3K+G)}$ | | | | | $\frac{3K-E}{6K}$ | $\frac{M-2G}{2M-2G}$ |
| $M =$ | $\lambda + 2G$ | $\frac{G(4G-E)}{3G-E}$ | $3K - 2\lambda$ | $K + \frac{4G}{3}$ | $\frac{\lambda(1-\nu)}{\nu}$ | $\frac{2G(1-\nu)}{1-2\nu}$ | $\frac{E(1-\nu)}{(1+\nu)(1-2\nu)}$ | $\frac{3K(1-\nu)}{1+\nu}$ | $\frac{3K(3K+E)}{9K-E}$ | |

$V_p$ Compressional wave velocity
$V_s$ Shear wave velocity

$K$ Bulk Modulus
$\nu$ Poisson's Ratio
E Young's Modulus
G Shear Modulus
$\lambda$ Lamé's First parameter
M P-wave Modulus

FIG. 4

EP 3 121 625 A1

500

512

502

506

COMM

504

CPU

510

I/O

508

FIG. 5

Europäisches
Patentamt
European
Patent Office
Office européen
des brevets

# EUROPEAN SEARCH REPORT

Application Number

EP 16 30 5903

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/176799 A1 (EXXONMOBIL UPSTREAM RES CO [US]; XU XIAOXI [US]; LIU ENRU [US]; GILLAR) 28 November 2013 (2013-11-28) * paragraphs [0024], [0030], [0035], [0038], [0039], [0040], [0054], [0063]; claim 11; figures 1,2 * | 1,9,10, 14 | INV. G01V11/00 |
| X | US 2010/326669 A1 (ZHU YAPING [US] ET AL) 30 December 2010 (2010-12-30) * paragraphs [0002] - [0004], [0007], [0012] - [0022], [0034], [0036], [0037], [0041], [0047] - [0054], [0057], [0059], [0060], [0062], [0070], [0075], [0079]; claim 28; figures 1,2 * | 1-15 | |
| X | L. A. Lubis ET AL: "Integration of Rock Digital Images to Improve Carbonate Rock Physics Model of Offshore Sarawak", Journal of Applied Sciences, 1 January 2014 (2014-01-01), pages 3354-3358, XP055319243, Retrieved from the Internet: URL:http://docsdrive.com/pdfs/ansinet/jas/2014/3354-3358.pdf [retrieved on 2016-11-14] * the whole document * | 1,10,14 | TECHNICAL FIELDS SEARCHED (IPC) G01V E21B G01N |

The present search report has been drawn up for all claims

| Place of search | Date of completion of the search | Examiner |
|---|---|---|
| The Hague | 15 November 2016 | Bream, Philip |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 30 5903

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2016

| Patent document cited in search report | | | Publication date | Patent family member(s) | | Publication date |
|---|---|---|---|---|---|---|
| WO 2013176799 | A1 | | 28-11-2013 | AU 2013266805 A1 | | 04-12-2014 |
| | | | | CA 2892995 A1 | | 28-11-2013 |
| | | | | EP 2856373 A1 | | 08-04-2015 |
| | | | | US 2015301223 A1 | | 22-10-2015 |
| | | | | WO 2013176799 A1 | | 28-11-2013 |
| US 2010326669 | A1 | | 30-12-2010 | AU 2009234101 A1 | | 15-10-2009 |
| | | | | CA 2716196 A1 | | 15-10-2009 |
| | | | | EP 2289017 A1 | | 02-03-2011 |
| | | | | US 2010326669 A1 | | 30-12-2010 |
| | | | | WO 2009126375 A1 | | 15-10-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62194377 A
- US 62339342 B